# EUROPEAN PATENT APPLICATION

(11) **EP 0 887 875 A1**
(43) Date of publication of application: **30.12.1998**
(21) Application number: 98305068.3
(22) Date of filing: 26.06.1998
(51) Int. Cl.: H01M 10/40

(54) **Non-aqueous electrolytic solution and secondary battery containing non-aqueous electrolytic solution**

(30) Priority: 27.06.1997 JP 172573/97
(71) Applicant: MITSUI CHEMICALS, INC., Tokyo (JP)
(72) Inventor: Toriida, Masahiro, c/o Mitsui Chemicals, Inc., Sodegaura-shi, Chiba-ken (JP); Yokoyama, Keiichi, Wakayama-shi, Wakayama-ken (JP)
(74) Representative: Cresswell, Thomas Anthony

(57) **Abstract**

A non-aqueous electrolytic solution comprising a solvent and an electrolyte, wherein the solvent comprises ethylene carbonate (EC), propylene carbonate (PC) and diethyl carbonate (DEC), and the volume ratio of ethylene carbonate to propylene carbonate (EC:PC) is from 10:1 to 10:8.

## Description

### BACKGROUND

The present invention relates to a non-aqueous electrolytic solution that enables a battery to exhibit high safety, excellent low-temperature properties and excellent charging/discharging properties and a non-aqueous electrolyte secondary battery containing it.

The trend of electronic equipment, such as portable personal computers, telephones and VTR becoming increasingly small, light and high in performance is accelerating. Against this background, there has been a growing demand for small but high-performance batteries as the power supplies that are suitable for use for such electronic equipment. From a viewpoint of the environmental problem and the effective utilization of energy, there is also a great demand for large and high-performance batteries for use for electric vehicles and the leveling of load on electric power. Especially the development of those secondary batteries that can be used repeatedly is awaited.

From a viewpoint of high-performance secondary batteries, lithium ion secondary batteries having the characteristics of high voltage and high energy density have drawn attention. The voltage of a battery is determined by the potential difference between positive and negative electrodes. Since lithium is the basest metal having an oxidation-reduction potential of - 3.03 V, high electromotive force can be obtained by using lithium as an active negative electrode material. Furthermore, since lithium has the lowest atomic weight and density of all metals, it has high energy density and low weight per unit electricity amount. Because of this, the use of lithium makes a reduction in the size and weight of a battery.

Research is being carried out in lithium ion secondary batteries with respect to the positive and negative electrodes, separator, electrolyte, etc. Above all, the electrolytic solution is one of the important factors that have a significant effect on the performance and properties of the battery.

For lithium secondary batteries, it is necessary to use an electrolyte which shows low reactivity with lithium or lithium compounds. In addition, since lithium secondary batteries operate at high voltage (3 to 4 V), the electrolytic solution is required to show little decomposition at high voltage and to show excellent ion mobility as it is an electrolytic solution. Non-aqueous electrolytes have drawn attention because they meet these requirements. Up to the present, carbonates, γ-butyrolactone, sulfolane, dimethoxyethane, tetrahydro furane, etc. are proposed for the non-aqueous solvent comprising a non-aqueous electrolytic solution.

A lithium ion secondary battery has the characteristics of a long cycle life and little self discharge as well as the aforementioned characteristics of high voltage and high energy density. In addition, a lithium ion secondary battery has the characteristic of requiring special consideration to be given to safety. Safety means here that a lithium ion secondary battery will not explore or ignite when subjected to severe conditions, namely, external short circuit, internal short circuit, overcharge or abnormally high temperatures (exceeding 100°C). As means for ensuring the safety of the lithium ion secondary battery, a separator having the shut-down capability, PTC element, protective circuit, current breaking mechanism, safety valve, etc. have been proposed or adopted.

The inventor of the present invention thought that the value of the lithium ion secondary battery will be raised greatly if its safety is improved by means of a non-aqueous electrolytic solution which comprises the battery and plays an important role in relation to the properties of the battery. Along this line of thought, the inventor continued research earnestly and finally successfully made the present invention.

### SUMMARY

As mentioned above, it is necessary to use an electrolytic solution having low reactivity with lithium or lithium compounds for the electrolyte of the lithium ion secondary battery. Furthermore, it is also required that the lithium ion secondary battery should show low decomposition at high voltage as it operates at high voltage and should exhibit high ion mobility as it is an electrolytic solution. An electrolytic solution normally consists of a solvent and an electrolyte, but the inventor of the present invention sought for a non-aqueous electrolytic solution as an electrolytic solution that would meet those requirements and improve the safety of the battery. As a result, the inventor finally reached the conclusion that the non-aqueous electrolyte should be such that a particular carbonate is used for the non-aqueous solvent and an electrolyte is contained in the non-aqueous solvent.

In the past, cyclic carbonates such as ethylene carbonate and propylene carbonate, chain carbonates such as diethyl carbonate, dipropyl carbonate and dibutyl carbonate, and mixtures such as the mixtures of ethylene carbonate or propylene carbonate and dimethyl carbonate or diethyl carbonate have been known as the carbonates that may be used as the non-aqueous solvent. But the inventor of the present invention has found a specified carbonate composition for a non-aqueous electrolytic solution that secures the great safety of batteries, while at the same time meeting the aforementioned requirements of the electrolytic solution, by combining carbonates at a specified ratio.

The non-aqueous solvent proposed by the inventor of the present invention is composed primarily of ethylene carbonate, propylene carbonate and diethyl carbonate combined at a specified ratio. Since this specified carbonate composition is used as a solvent for the electrolytic solution, the electrolytic solution shows low decomposition at high voltage and have high ion mobility. Thus the electrolyte is capable of giving a battery high stability, while maintaining the excellent low-temperature and charging/discharging properties of the battery.

The battery containing the non-aqueous electrolytic solution invented by the inventor of the present invention is a battery basically comprising an electrolytic solution, a positive electrode, a negative electrode and a separator. An appropriate positive electrode, negative electrode and separator may be selected as required, but they will manifest the aforementioned characteristics of a battery when they are combined with an electrolytic solution.

The characteristics of the present invention are made clear from the following description.

### BRIEF DESCRIPTION OF THE DRAWINGS

A number of batteries as embodiments of the present invention can be clearly seen from the attached drawings, in which:
Fig. 1 is a schematic cross-sectional view of a rectangular battery representing an example of the non-aqueous electrolytic solution secondary battery of the present invention.
Fig. 2 is a schematic cross-sectional view of a coin-type battery representing an example of the non-aqueous electrolytic solution secondary battery of the present invention.

### DETAILED DESCRIPTION OF THE INVENTION

The non-aqueous electrolytic solution and non-aqueous electrolytic solution secondary battery using the non-aqueous electrolytic solution to which the present invention relates are explained in detail below.

### Non-aqueous Electrolyte

The non-aqueous solvent comprising the non-aqueous electrolytic solution of the present invention consists of a mixture of ethylene carbonate (EC), propylene carbonate (PC) and diethyl carbonate (DEC). The volume ratio of the ethylene carbonate and propylene carbonate in the mixture has to be such that the ethylene carbonate is present in an excess amount. The preferable volume ratio (EC:PC) is 10:1 to 10:8, preferably 10:2 to 10:7, more preferably 10:4 to 10:6. The mixture of ethylene carbonate (EC) and propylene carbonate (PC) having the volume ratio within this range enables a battery to show high safety. The volume ratio of a total of ethylene carbonate and propylene carbonate to diethyl carbonate ((EC+PC):DEC) may be 7:3 to 3:7, preferably 6:4 to 5:5. The mixture of ethylene carbonate (EC), propylene carbonate (PC) and diethyl carbonate (DEC) having the volume ratio within this range enables a battery to exhibit excellent low temperature properties.

The volume of each of the non-aqueous solvents such as EC, PC, DEC and MEC in the present invention is calculated by dividing the weight of each of the non-aqueous solvents such as EC, PC, DEC and MEC by the density such non-aqueous solvent(density at 20°C for PC, DEC and MEC, density at 40°C for EC).

As for the electrolytic solution of the lithium ion secondary battery, it is necessary to pay attention to the content of water as an impurity. It is desirable before use to evaporate, remove through a molecular sieve or remove by any other dehydration method known to the public, the water content of the non-aqueous solvent in the electrolytic solution. The residual water content of the non-aqueous solvent after the dehydration treatment can be not more than 50 ppm, preferably not more than 10 ppm.

It is sufficient that the non-aqueous electrolytic solution of the present invention should meet the aforementioned requirement of volume ratio. But more preferably, the volume ratio among the ethylene carbonate, propylene carbonate and diethyl carbonate of the mixed solvent (EC:PC:DEC) may be(is) 35 to 45:5 to 25:30 to 60.

In the present invention, the aforementioned non-aqueous solvent may contain methyl ethyl carbonate (MEC). Methyl ethyl carbonate (MEC) may be contained in the non-aqueous solvent at a volume ratio to diethyl carbonate (DEC) (MEC/DEC)of 0 to 1, preferably 0.1 to 1. The non-aqueous electrolytic solution of preferably 0.1 to 1. The non-aqueous electrolytic solution of the present invention is useful as the electrolytic solution especially for the lithium ion secondary battery.

It should be noted that any non-aqueous solvent other than ethylene carbonate, propylene carbonate, diethyl carbonate and methyl ethyl carbonate may be present in the non-aqueous electrolytic solution unless its presence harms the performance of the electrolytic solution as an electrolytic solution. Examples of such non-aqueous solvent that may be present in the non-aqueous electrolytic solution include chain esters such as methyl formate, ethyl formate, propyl formate, methyl acetate, ethyl acetate, propyl acetate, methyl propionate and ethyl propionate, chain ethers such as dimethoxyethane, cyclic ethers such as tetrahydrofuran, chain amides such as dimethylformamide, chain carbamates such as methyl-N,N-dimethylcarbamate, cyclic esters such as γ -butyrolactone, cyclic sulfone such as sulfolane, cyclic carbamates such as N-methyloxazolidinon, and cyclic amides such as N-mehylpyrolydon.

It is desirable that the amount of such other non-aqueous solvent should be in the range of not more than 20 vol%, preferably 5 to 10 vol%, against the total amount of the solvents in the non-aqueous electrolytic solution.

Examples of the electrolyte contained in the non-aqueous electrolytic solution include salts of LiPF₆, LiBF₄, LiPF₆, LiAsF₆, LiClO₄, LiN(SO₂CF₃)₂, LiC(SO₂CF₃)₃, and LiN(SO₂C₂F₅)₂. These electrolytes may be used singly or in combination of not less than 2 of them.

All of the aforementioned electrolytes form Li+ ions together electrolyte. The amount of these electrolytic solutions may be 0.5 to 2.0 mol/liter, preferably 0.7 to 1.5 mol/liter in the non-aqueous electrolytic solution.

Any of the aforementioned electrolyte may be added to the non-aqueous solvent in advance.

Regarding the properties of the non-aqueous electrolytic solution of the present invention, its specific conductivity (or ionic conductivity) can be 7.5 to 8.5 mS/cm, preferably 7.9 to 8.5 mS/cm, and its specific viscosity at room temperature (25°C) can be preferably 2 to 10 cP.

The use of the non-aqueous electrolytic solution of the present invention in the fabrication of a lithium secondary battery enables a secondary battery showing excellent safety performance to be obtained. The safety performance of the battery can be confirmed by the fact that there is no occurrence of ignition or smoke emission when it is put to a nailing test.

### A Secondary Battery containing Non-aqueous Electrolytic solution

A non-aqueous electrolyte secondary battery comprises:
a negative electrode containing a carbonaceous material capable of doping and undoping lithium ions as an active negative electrode material;
a positive electrode containing lithium and a transition metal oxide as an active positive material;
a separator; and
the aforementioned non-aqueous electrolytic solution.

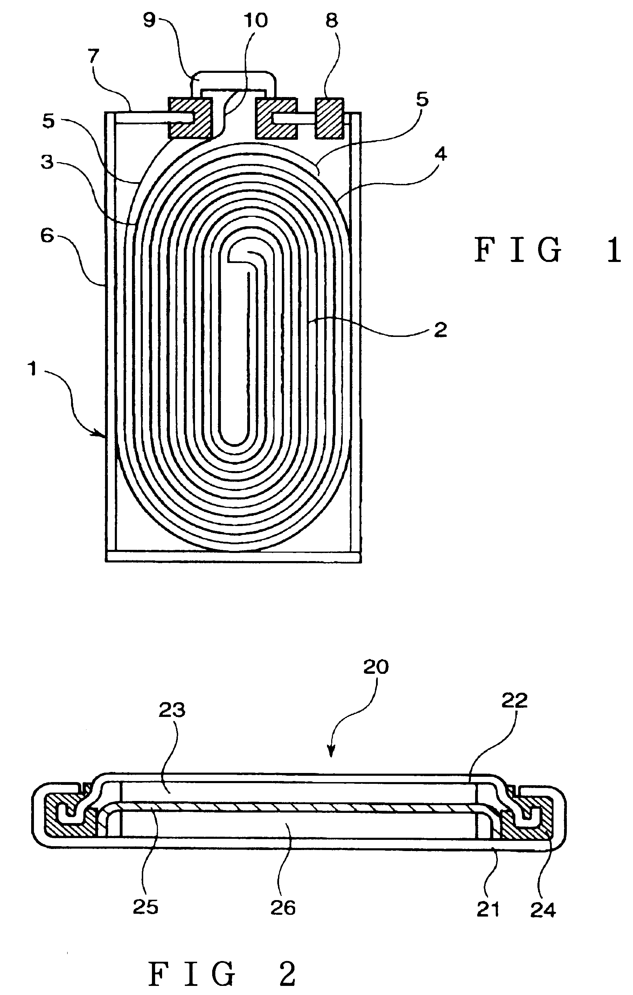

This non-aqueous electrolytic solution battery may be applied to a non-aqueous electrolytic solution secondary battery of the rectangular type, for example. A secondary battery containing rectangular type, for example. A secondary battery containing a non-aqueous electrolytic solution of the rectangular type is shown in Fig. 1. A electrode group 2 is composed as follows: A negative electrode 4 comprising a negative electrode collector coated with an active negative electrode material and a positive electrode 3 comprising an positive electrode collector coated with an active positive electrode material are wound with Separator 5 placed in-between and put in Battery Case 6, and then the non-aqueous electrolytic solution is injected into the battery case. A battery cover 7 with a safety valve 8 is attached to the battery case by means of laser welding. A positive terminal 9 is connected to the positive electrode 3 via a positive electrode lead 10, and the negative electrode 4 is connected by its being in contact with the inner walls of the battery case.

As the active negative electrode material comprising Negative Electrode 4, a carbonaceous material capable of doping and undoping lithium ions. As the carbonaceous material, every type of carbonaceous material, including activated carbon, carbon fiber, carbon black, small mesophase spheres, calcined (baked) material of polyfurfuryl alcohol or petroleum pitch, carbide of polysiloxane and epoxysilane, may be used.

These carbonaceous materials may be either crystalline or amorphous. Preferable crystalline carbons are those graphite materials having a true density of not less than 2.10 g/cm³, preferably not less than 2.18 g/cm³. The graphite materials having such true density have an average layer spacing of the (002) plane of less than 0.340 nm, preferably not less than 0.335 nm but not more than 0.337 nm as determined by X-ray diffraction, and a C axis crystallite size of the (002) plane of not less than 14.0 nm.

Moreover, those carbonaceous materials which are not graphitized even when they are heat-treated at approximately 3,000°C (non-graphitizable carbon) may also be used as the active negative electrode material. Preferable non-graphitizable carbon may be those which have an average layer spacing of the (002) plane of not less than 0.37 nm as determined by X-ray diffraction, a true density of less than 1.70 g/cm³ and having not less than one heating peak at not more than 700°C in differential thermal analysis in the air.

For example, in the case of forming a negative electrode using non-graphitizable carbon as the active negative electrode material, 10 to 20 wt% of a functional group containing oxygen are first introduced into petroleum pitch, caused to be crosslinked with oxygen, and then carbonized to prepare a carbon precursor. Next, this carbon precursor is calcined at a temperature of approximately 900 to 1,500°C, for example, to prepare a carbonaceous material having the nature close to that of glass-like carbon. After this, the powder of the carbonaceous material thus obtained and polyvinylidene fluoride (PVDF) as a binder are mixed to prepare a negative electrode mixture and dispersed in solvent N-methylpyrrolidone, etc. to obtain a slurry (a paste state). This slurry is coated onto the negative electrode collector made of band-shaped copper foil and dried. It is then compression-molded to form a band-like negative electrode.

The thickness of such negative electrode mixture is approximately 40 to 160 µm (example: 80 µm on both surfaces), for example, on both surfaces.

Examples of the active positive electrode material include_a composite metal oxide or intercalation compound containing lithium, preferably a composite metal oxide or intercalation compound containing lithium and at least one transition metal selected from Co, Ni and Mn, more preferably a lithium composite metal oxide represented by the general formula, LiMO₂(wherein M represents at least one of Co, Ni and Mn). Out of them, LiCoO₂ is preferable because it shows high energy density.

For Positive Electrode 3, 1 mol of lithium carbonate and cobalt carbonate in an amount in mol twice as much as the lithium carbonate, for example, are mixed and calcined in the air at approximately 70 to 110°C to obtain LiCoO₂. The resultant LiCoO₂ is ground to a particle size of approximately 5 to 30 µm. Next, a mixture of the aforementioned LiCoO₂ fine powder and lithium carbonate, a conductive material graphite and polyvinylidene as a binder fluoride are mixed to prepare an positive electrode mixture. This mixture is then dispersed into N-methylpyrrolidone to obtain an slurry. This slurry is coated onto both surfaces of an positive electrode collector made of band-like aluminum foil, dried and compression-molded to obtain an intended positive electrode. The thickness of this positive electrode is the same as in the case of the aforementioned Negative Electrode 4.

Positive Electrode 3 normally contains an amount of Li equivalent to a charge/discharge capacity of not less than 250 mAh per g of the active negative electrode material in the normal condition after repetition of 5 times of charge and discharge, for example.

As the separator, porous polymer films approximately 10 to 60 µm in thickness and approximately 30 to 50 mm in width, for example, are used preferably. Out of them, a porous polyolefin film is preferable. Examples of such porous polyolefin_film include porous polyethylene film, porous polypropylene film and a multi-layer film of porous polyethylene film and polypropylene film.

The non-aqueous electrolytic solution secondary battery obtained by the present invention shows excellent safety performance especially in that it does not ignite in nailing test. Furthermore, this non-aqueous electrolytic solution secondary battery shows high energy density, excellent charge/discharge properties and low-temperature properties. Because of this, the non-aqueous electrolytic solution secondary battery of the present invention may be used suitably even in a cold district.

The non-aqueous electrolytic solution secondary battery of the invention_contains the non-aqueous electrolytic solution as explained above. The shape of the battery is not limited to the share shown in Fig. 1 but may be the coin type as shown by 20 of Fig. 2. In Fig. 2, 21 represents the battery case; 22, the sealing plate; 23, the positive electrode; 24, the gasket; 25, the separator; and 26, the positive electrode. The battery may be of the cylindrical and other shapes.

Given below is a specific description of the present invention, citing examples. But the present invention is not limited by these examples in any way.

### Example 1

### Preparation of the non-aqueous electrolytic solution:

A non-aqueous electrolytic solution was prepared by dissolving LiPF₆ in a mixed solvent ((mixture volume ratio:
EC:PC:DEC=40:20:40)) of ethylene carbonate (EC), propylene carbonate (PC) and diethyl carbonate (DEC) at a volume ratio(EC:PC:DEC) of 40:20:40 in such manner that the electrolyte concentration was 1 mol/liter.

### Preparation of a battery:

A non-aqueous electrolyte secondary battery as shown in Fig. 1 was prepared by the following procedure. 90 parts by weight of lithium cobalt oxide (LiCoO₂₎ as the active material, 8 parts by weight of polyvinylidene fluoride as the binder and 2 parts by weight of acetylene black as the conductive material were mixed together and brought into a paste state by adding a proper amount of N-methylpyrrolidone as a solvent. The paste was coated onto both sides of the collector comprising aluminum foil 20 µm in thickness (coated amount: 2.5 g/cm²) and dried. After that, it was pressed to a thickness of 180 µm and cut to a width of 19 mm to prepare the positive electrode Plate 3. Next 9.4 parts by weight of a graphite-based carbonaceous material as the active material and 6 parts by weight of polyvinylidene fluoride were mixed and brought into a paste state by adding a proper amount of N-methylpyrrolidone as a solvent. The paste was coated onto both sides of the collector comprising copper foil 10 µm in thickness (coated amount: 1.2 g/cm²) and dried. After that, it was pressed to a thickness of 220 µm and cut to a width of 20 mm to prepare the negative electrode 4. The positive electrode 3 and the negative electrode 4 were wound with Separator 5 placed in-between and put in the battery case 6. Then the aforementioned non-aqueous electrolytic solution was injected. Next, the battery cover 7 with the safety valve 8 attached to it was fixed to the battery case 6 by laser welding. The positive terminal 9 was connected to the positive electrode 3 via the positive electrode lead 10, and the negative electrode 4 was brought into contact with the inner walls of the battery case 6. Thus, a battery of a rectangular type was prepared.

### Charging/discharging properties:

The battery was charged to its full capacity to 4.1V at constant current and constant voltage for 3 hours at a current of 0.5C at 25°C. The battery was then discharged to 2.75V at 1C at -20°C and 25°C, respectively and the discharging capacity at this time was measured. The results of the measurement are shown in Table 1. Nailing test:

The battery was charged to its full capacity to 4.1V at constant current and constant voltage for 3 hours at a current of 0.5C at 25°C. An iron nail 2.5 mm in diameter was driven at a rate of approximately 2.3 cm/sec to the electrode surface practically at the center of the battery through the side of Case 6 of Battery 1 in the perpendicular direction, and the condition of the battery thereafter was observed. The results of the observation are shown in Table 1.

### Example 2

In the same manner as described in Example 1 except that the mixing volume ratio of the solvent was EC:PC:DEC=35:10:55, the charging/discharging properties of a battery were determined, and a nailing test was conducted on the battery. The results are shown in Table 1.

### Comparative Example 1

In the same manner as described in Example 1 except that the mixing volume ratio of the solvent was EC:PC:DEC=30:30:40, the charging/discharging properties of a battery were determined, and a nailing test was conducted on the battery. The results are shown in Table 1.

### Example 3

In the same manner as described in Example 1 except that a mixed solvent of ethylene carbonate (EC), propylene carbonate (PC), diethyl carbonate (DEC) and methyl ethyl carbonate (MEC) (mixing volume ratio: EC:PC:DEC:MEC=40:20:35:5) was used as the mixed solvent, the charging/discharging properties of a battery were determined, and a nailing test was conducted on the battery. The results are shown in Table 1.

### Example 4

In the same manner as described in Example 1 except that a mixed solvent of ethylene carbonate (EC), propylene carbonate (PC), diethyl carbonate (DEC) and methyl ethyl carbonate (MEC) (mixing volume ratio: EC:PC:DEC:MEC=40:20:30:10) was used as the mixed solvent, the charging/discharging properties of a battery were determined, and a nailing test was conducted on the battery. The results are shown in Table 1.

### Example 5

In the same manner as described in Example 1 except that a mixed solvent of ethylene carbonate (EC), propylene carbonate (PC), diethyl carbonate (DEC) and methyl ethyl carbonate (MEC) (mixing solvent, the charging/discharging properties of a battery were determined, and a nailing test was conducted on the battery. The results are shown in Table 1.

### Example 6

In the same manner as described in Example 1 except that a mixed solvent of ethylene carbonate (EC), propylene carbonate (PC), diethyl carbonate (DEC) and methyl ethyl carbonate (MEC) (mixing volume ratio: EC:PC:DEC:MEC=40:20:20:20) was used as the mixed solvent, the charging/discharging properties of a battery were determined, and a nailing test was conducted on the battery. The results are shown in Table 1.

**Table 1**

| | Non-aqu solvent composition (volume ratio) | | | | Electrolyte (LiPF₆) conc (mol/l) | Properties of electrolyte | | | Discharge capacity mAh | | Nailing test result |
|---|---|---|---|---|---|---|---|---|---|---|---|
| | EC | PC | DEC | MEC | | Flash point °C | Viscos -ity cP at25°C | Electric Conductivity MS/cm at 25°C | 25°C | -20°C | |
| Ex. 1 | 40 | 20 | 40 | | 1 | 43.5 | 5.5 | 7.9 | 619 | 448 | A |
| Ex. 2 | 35 | 10 | 55 | | 1 | 39.0 | | 8.0 | 640 | 472 | A |
| Ex. 3 | 40 | 20 | 35 | 5 | 1 | 41.5 | 5.4 | 8.0 | 630 | 398 | A |
| Ex. 4 | 40 | 20 | 30 | 10 | 1 | 41.0 | 5.3 | 8.2 | 636 | 351 | A |
| Ex. 5 | 40 | 20 | 25 | 15 | 1 | 39.5 | 5.2 | 8.3 | 635 | 424 | A |
| Ex. 6 | 40 | 20 | 20 | 20 | 1 | 38.6 | 5.1 | 8.3 | 619 | 521 | A |
| Comp Ex. 1 | 30 | 30 | 40 | | 1 | | | | 598 | 412 | B |
| Nailing test results: A: No ignition or smoke emission occurred. B: Both ignition and smoke emission occurred. | | | | | | | | | | | |

## Claims

1. A non-aqueous electrolytic solution comprising a solvent and an electrolyte, wherein the solvent comprises ethylene carbonate (EC), propylene carbonate (PC) and diethyl carbonate (DEC), and the volume ratio of ethylene carbonate to propylene carbonate (EC:PC) is from 10:1 to 10:8.

2. An electrolytic solution according to Claim 1, wherein the volume ratio of ethylene carbonate and propylene carbonate to diethyl carbonate ([EC+PC]:DEC) is from 7:3 to 3:7.

3. An electrolytic solution according to Claim 1 or Claim 2, wherein the volume ratio of ethylene carbonate to propylene carbonate to diethyl carbonate (EC:PC:DEC) is 35 to 45:5 to 25:30 to 60.

4. An electrolytic solution according to any one of Claims 1 to 3, wherein the solvent further comprises methyl ethyl carbonate (MEC) and the volume ratio of methyl ethyl carbonate to diethyl carbonate (MEC:DEC) is not more than 1:1.

5. An electrolytic solution according to any one of the preceding Claims, wherein the electrolyte is at least one lithium salt selected from LiPF₆, LiBF₄, LiAsF₆, LiClO₄, LiN(SO₂CF₃)₂, LiC(SO₂CF₃)₃, and LiN(SO₂C₂F₅)₂.

6. A secondary battery comprising:
a negative electrode;
a positive electrode;
a separator; and
a non-aqueous electrolytic solution as defined in any one of Claims 1 to 5.

7. A secondary battery according to Claim 6, wherein the negative electrode contains a carbonaceous material capable of doping and undoping lithium ions as an active negative electrode material; and
the positive electrode contains lithium and at least one of Co, Ni and Mn as an active positive electrode material.

8. A secondary battery according to Claim 6 or Claim 7, wherein the separator is selected from porous polyethylene films, porous polypropylene films and multi-layer films of porous polyethylene film and polypropylene film.

9. A secondary battery according to any one of Claims 6 to 8 comprising a non-aqueous electrolytic solution as defined in Claim 3.

10. A secondary battery according to any one of Claims 6 to 8 comprising a non-aqueous electrolytic solution as defined in Claim 4.

11. A secondary battery according to Claim 9 or Claim 10 comprising an electrolyte as defined in Claim 5.
